Europäisches Patentamt

(19) European Patent Office

Office européen des brevets

(11) EP 0 793 335 A2

(12) EUROPEAN PATENT APPLICATION

(43) Date of publication:
03.09.1997 Bulletin 1997/36

(51) Int. Cl.⁶: H02M 7/5395

(21) Application number: 97102696.8

(22) Date of filing: 19.02.1997

(84) Designated Contracting States:
CH DE FR LI

(30) Priority: 01.03.1996 JP 44460/96

(71) Applicant: HITACHI, LTD.
Chiyoda-ku, Tokyo 101 (JP)

(72) Inventors:
• Inarida, Satoru
Hitachinaka-shi, Ibaraki 312 (JP)
• Nakata, Kiyoshi
Nisiibaraki-gun, Ibaraki 319-02 (JP)

• Yasuda, Kouji
Hitachinaka-shi, Ibaraki 312 (JP)
• Suzuki, Masato
Naka-gun, Ibaraki 319-21 (JP)
• Miyake, Wateru
Hitachinaka-shi, Ibaraki 312 (JP)

(74) Representative: Strehl Schübel-
Hopf Groening & Partner
Maximilianstrasse 54
80538 München (DE)

(54) Pulse width moldulation control system for electric power converter

(57) In pulse width modulation control for an electric power converter, occurrence of lower order harmonics, in order to suppress fractional order harmonics and direct current component even in a condition where a carrier frequency is several times as small as a frequency of a command value, pulse width modulation pulses for driving semiconductor elements composing an electric converter are calculated by comparing a command signal from a command value generating means with a carrier signal of a continuous triangular- wave having a constant period, which comprises a means for separately calculating a command value of the command signal from the command value generating means and a time product of the pulse width modulation pulses and calculating a difference value between the both time products, the pulse width modulation pulse being calculated by the difference value to the command signal from the command value generating means.

FIG.1

## Description

### BACKGROUND OF THE INVENTION

The present invention relates to a system for performing pulse width modulation control to an electric power converter such as a traction inverter, a supply converter and the like, and more particularly to a pulse width modulation control system for an electric converter capable of operating an inverter without generating low frequency pulsation in voltage and current when a ratio of switching frequency to inverter operating frequency is low.

As pulse width modulation control methods having been used, there is a sub harmonic method in which pulse width modulation pulses for driving an inverter are generated by comparing a carrier signal of continuous triangular-wave with a constant frequency with an inverter output command value. Further, the pulse width modulation method can be roughly classified into an asynchronous pulse width control method and a synchronous pulse width modulation method which will be described below.

In the asynchronous pulse width modulation control, when a frequency of the triangular-wave carrier (herein after referred to as "carrier frequency") is high enough compared to a frequency of the command value, the carrier frequency is fixed to a constant value and only the frequency of the command value is varied. For example, such asynchronous pulse width modulation control is disclosed in US Patent 5,467,262.

In the synchronous pulse width modulation control, when a carrier frequency comparably near a frequency of the command value, the carrier frequency is always set to an integer times of the command value. In that time, the carrier frequency and a ratio of the carrier frequency to the frequency of the command value are varied according to the frequency of the command value.

In a case of the asynchronous pulse width modulation control, it is required that the carrier frequency is sufficiently higher then the frequency of the command value, and the ratio of the carrier frequency to the frequency of the command value is generally required to be larger than around fifteen. When the ratio is smaller than this value, low order harmonics are increased and fractional order harmonics are generated. Therefore, current ripple becomes large, and consequently large capacity switching elements are required. In addition to this, when a motor is driven, there occurs pulsation in the torque.

Although such problems can be solved by setting the carrier frequency to a sufficiently high value, there occurs another problem that the switching loss increases and accordingly the efficiency of the inverter is decreased. Further, for a large capacity inverter, there is a limitation in available switching elements, and therefore the carrier frequency cannot physically be set to a high value.

On the other hand, in a case of the synchronous pulse width modulation control, even when the carrier frequency is low, harmonics can be suppressed to a certain degree and occurrence of the fractional order harmonics can be prevented. However, the carrier frequency and number of pulses are required to be switched depending on the frequency of a command value (determined by a ratio of the carrier frequency to the frequency of the command value), there arises a problem in that the control becomes complex and pulsation accompanied by switching of number of pulses (switching shock) occurs.

In addition to this, when the synchronous pulse width modulation control is employed for an electric vehicle or an elevator, the passengers feel uncomfortable about sound due to magnetic noise.

### SUMMARY OF THE INVENTION

An object of the present invention is to provide an asynchronous pulse width modulation control system which can prevent increase of lower order harmonics and occurrence of fractional order harmonics even when the ratio of the switching frequency to the operating frequency of an inverter is small.

The present invention is characterized by a pulse width modulation control system in which pulse width modulation pulses for driving semiconductor elements composing an electric converter are calculated by comparing a command signal from a command value generating means with a carrier signal of a continuous triangular-wave having a constant period, which comprises a means for separately calculating a command value of the command signal from the command value generating means and a time product of the pulse width modulation pulses and calculating a difference value between the both time products, the pulse width modulation pulse being calculated by the difference value to the command signal from the command value generating means.

According to the present invention, since the sum of output pulse widths agrees with the sum of the command value by adding the difference between the time product of the command value and the time product of the pulse width modulation pulse to the command value, occurrence of unbalance between widths of positive pulse and negative pulse can be prevented and generation of lower order harmonics and fractional harmonics can be prevented.

### BRIEF DESCRIPTION OF THE DRAWINGS

FIG.1 is a block diagram showing the construction of an embodiment in accordance with the present invention.

FIG.2 is a chart explaining a cause producing a problem to be solved by the present invention.

FIG.3 is a chart explaining an operation of the present invention.

FIG.4 is a chart explaining an operation when the present invention is applied to a discrete time system.

FIG.5 is charts showing examples of simulation results where an induction motor is driven by pulse width modulation of the prior art and the pulse width modulation according to the present invention.

## DETAILED DESCRIPTION OF THE REFERRED EMBODIMENTS

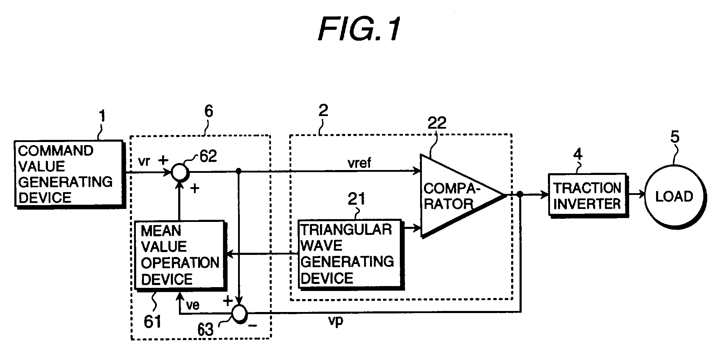

An embodiment of the present invention will be described in detail below, referring to an inverter control system of FIG.1. In a command value generating unit 1, an output voltage command value $v_r$ for an inverter 4 is generated. In a pulse compensation unit 6, a signal $V_{ref}$ is output based on the output $v_r$ of the command value generating unit 1. A pulse width modulation pulse generating unit 2 receives the output signal $V_{ref}$ of the pulse compensation unit 6, and generates a pulse width modulation pulse $v_p$ corresponding to the signal $V_{ref}$. Further, the inverter control system is connected to an inverter 4 which outputs alternating current from direct current by driving switching elements composing the inverter based on the pulse width modulation signal of $v_p$, and a load 5 such as a motor is connected in the alternating current output side of the inverter system.

The output signal $v_p$ of the pulse width modulation pulse generating unit 2 is fed back to the unit 6. The unit 2 is a well-known pulse width modulation pulse generating unit which generates a pulse width modulation pulse $v_p$ by comparing a carrier signal of continuous triangular-wave having a constant period output from a triangular-wave generating unit with the signal $V_{ref}$ using a comparater 22.

The present invention is characterized by the pulse compensation unit 6 which is composed of a subtracter 63 for calculating a difference of the signal $V_{ref}$ input to the pulse width modulation pulse generating unit and an output $v_p$ of pulse width modulation pulse, an average value calculating unit for calculating an average value $v_e$ of the output of the subtracter 63 every one-half period of a triangular wave output from the triangular-wave generating unit, and an adder 62 for adding the output $v_e$ of the average value calculating unit to the command value $v_r$ to output the signal $V_{ref}$.

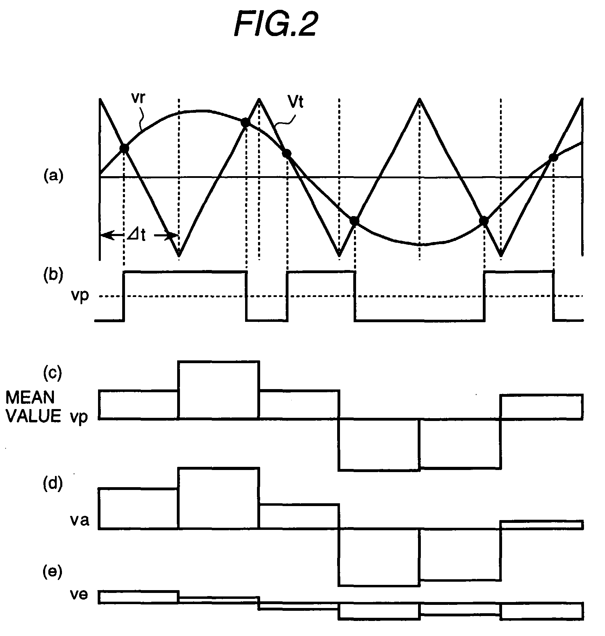

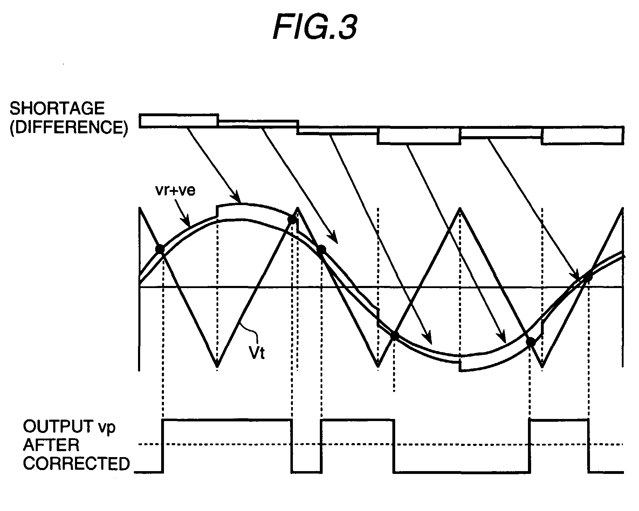

Operation of the pulse compensation method according to the present invention will be described below, referring to FIG.2 and FIG.3. In order to make it easy to understand, description will be made by employing the conventional triangular-wave comparing method as an example. An inverter command value $v_r$ and a triangular wave $v_t$ are shown in FIG.2 (a), an output $v_p$ of the pulse width modulation pulse generating unit is shown in (b), an average value (time product) of $v_p$ over a one-half period of the triangular wave is shown in (c), an average value (time product) of the command vale $v_r$ over a one-half period of the triangular wave is shown in (d), and a difference $v_e$ between the average value of $V_r$ and the average value of $V_p$ is shown in (e). The character $\Delta t$ is a one-half period of the triangular wave, and $\Delta t = 1/2f_c$ where $f_c$ is a frequency of the triangular wave.

Description will be made below on the principle of generating lower order harmonics and fractional order harmonics in the asynchronous pulse width modulation and on the pulse compensation method for suppressing the lower order harmonics and the fractional order harmonics, referring to FIG.2.

If an average value $v_a$ of a modulated wave in $\Delta t$ is accurately reflected on an output pulse $v_p$ of the pulse width modulation, lower order harmonics and fractional order harmonics cannot be generated. However, as shown in FIG.2 the average value of the modulated wave and the voltage $v_p$ reflected on the pulse width modulation pulse do not always agree. As a result, a difference $v_e$ between the average value of the modulated wave and the voltage reflected on the pulse width modulation pulse is generated, which causes lower order harmonics and fractional order harmonics and low frequency pulsation current flows.

In the present invention, in order to suppress occurrence of the lower order harmonics and the fractional order harmonics, the pulse compensation unit 6 is introduced. In the pulse comensation unit 6, a difference between a voltage $v_p$ and a command value is calculated, and a time average $v_e$ of the difference over a one-half period $\Delta t$ of the triangular wave is calculated by the average value calculating unit 61, and the result is added to a command value $v_r$.

Here, numeral 62 is an adder, 63 a subtractor.

Therefore, as shown in FIG.3, a command value in the next pulse calculation period following to a pulse calculation period where a difference $v_e$ is generated is set to $v_r + v_e$. As the result, a pulse reflected $v_e$ is generated in the output $v_p$ of the pulse calculation unit 2. Therefore, the difference $v_e$ in the voltage is certainly output in the next calculation period following to the calculation period where the difference $v_e$ is generated. In a case where a pulse to be generated cannot be obtained because the pulse to be generated based on $v_r + v_e$ is larger than the maximum generable pulse or smaller than the minimum generable pulse, shortage in compensation is reflected on the further next pulse. Therefore, even in such a case, $v_e$ can be properly compensated.

As described above, by repeating of calculating an average value of difference between a command value and an output pulse and adding the average value of difference to a command value $v_r$ in the next pulse calculation period, the average voltage of command vales and the average value of output pulses agrees and the difference between them becomes zero when they are counted over several number of pulse calculation periods. That is, it is possible to eliminate the component of lower order harmonics and the component of fractional harmonics which have a long period and cause a low frequency pulsating current.

Thereby, occurrence of low frequency pulsation can be suppressed. Further, the pulse width modulation pulse may be calculated by multiplying a gain to the average value $v_e$ of the difference between the command value and the pulse width modulation pulse, and adding the calculated result to the command value, if necessary. Furthermore, when the command signal is a periodic function such as a sinusoidal wave function or a triangular wave function, an average voltage of the command values may be easily calculated by preparing a function integrating the command signal in advance and by obtaining an average voltage of the command value using the integrated function.

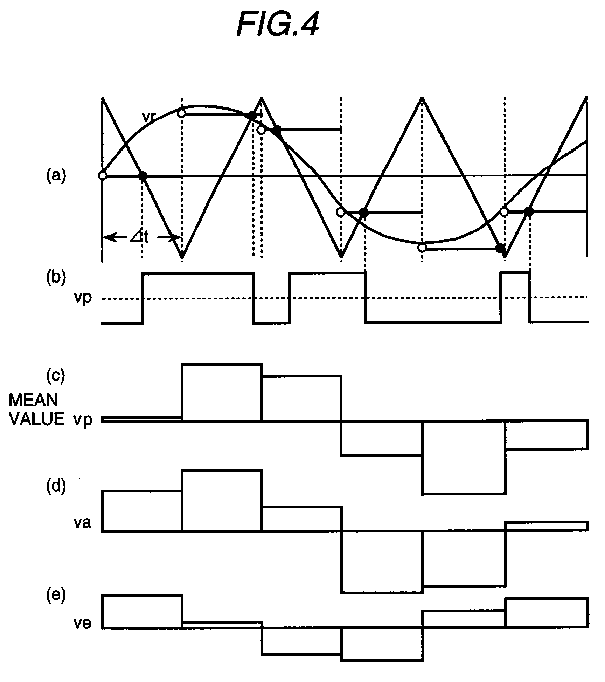

Description will be made below on operation of a system in which the embodiment of FIG.1 is operated using a discrete time system such as software or a digital circuit. The signals and the marks of FIG.4 corresponding to those of FIG.2 are indicated by the same reference characters. In a case of a discrete time system, it is impossible to continuously monitor the command vale, and when a pulse width modulation pulse $v_p$ is calculated with software, the pulse width modulation pulse is not calculated by directly comparing the command vale and the triangular wave as shown in FIG.2. Although both of the command value $v_r$ and the triangular wave are drawn together in FIG.4, the triangular wave is a hypothetical wave and a command value is sampled at a timing $\Delta t$ corresponding to a one-half period of the triangular wave (hollow circles in the figure indicate sampling points). A pulse width modulation pulse $v_p$ is calculated based on the magnitude of the sampled value.

In this method, when number of samplings becomes small compared to the frequency of the command value (when the frequency of the command value becomes large),the difference $v_e$ between the command value $v_r$ and the average value of $v_p$ becomes larger comparing to the case of continuous time system. Therefore, in the discrete time system, larger lower order harmonics and larger fractional order harmonics are produced and pulsation in current also becomes larger. When the command value $v_r$ is a periodical function such as a sinusoidal wave function, the average value of the command value $v_r$ can be easily and accurately obtained by preparing an integrated function of the command value in advance as described above even in the discrete time system. By subtracting an average of $v_p$ from an average of a command value $v_r$, the difference $v_e$ can be calculated and the pulse can be compensated as the same as in the continuous time system. Thereby, occurrence of the lower order harmonics and the fractional order harmonics can be prevented. As described above, pulsation in the discrete time system is larger than pulsation in the continuous time system. Therefore, the effect of the present invention appears more clearly in the discrete time system.

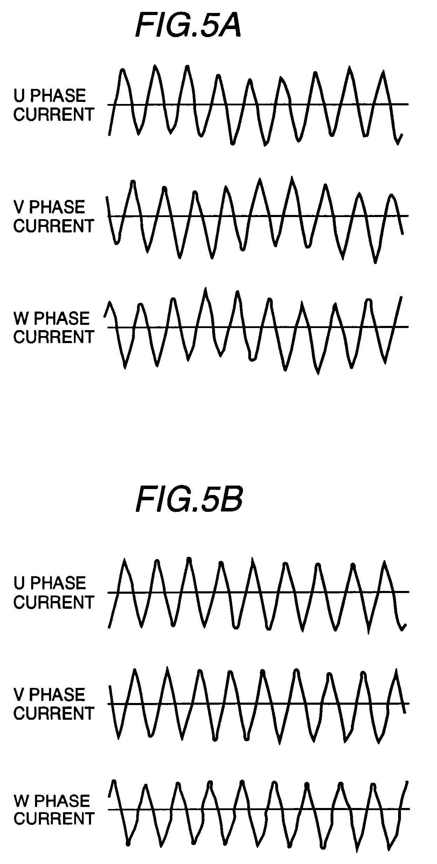

FIG.5 shows simulation results where an electric power converter having an induction motor as the load is driven by an asynchronous pulse width modulation. inverter controlled by the prior art and by the pulse width modulation control according to the present invention.

In order to clearly show the effect of the present invention against the prior art, a case where the ratio n of the carrier frequency to the frequency of the command is 7.8 smaller than 10. FIG.5 (a) shows a case without the pulse compensation. Because there exists a difference between the average value of the command value over the pulse calculation period, pulsation of low frequency (fractional order harmonics) occurs. On the other hand, in a case of according to the present invention, there is no low frequency pulsation in current as shown in FIG.5 (b), which shows the effect of the present invention.

For a discrete time system, the pulse compensation has been performed suing the average value of voltage difference as the same as for the continuous time system. In a case of the discrete system, particularly in a case of generating pulse width modulation pulses using software, most method employ a construction where time of changing pulse from ON to OFF or from OFF to ON based on $v_r$ is calculated and then the state of pulse is changed based on the time. In this case, the same effect as in the case of performing pulse compensation using the average value of the voltage difference can be also obtained by determining pulse generating time by adding time which is determined by converting $v_e$ to pulse changing time to pulse changing time which is determined from only $v_r$, and then by generating pulse width modulation pulse using the pulse generating time.

Although the above embodiments have been described by taking an inverter as an example, it is needless to say that the present invention can be applied to a converter which converts alternating current to direct current.

According to the present invention, it is possible to provide an asynchronous pulse width modulation control system which can prevent generation of lower order harmonics and fractional order harmonics even at a low carrier frequency.

Further, by employing the present invention, a switching frequency of an electric power converter can be lowered. Therefore, the efficiency of the electric power converter cane improved and at the same time the system can be made small in size and light in weight.

## Claims

1. A pulse width modulation control system for a electric power converter in which pulse width modulation pulses for driving semiconductor elements composing an electric converter are calculated by comparing a command signal from a command value generating means with a carrier signal of a continuous triangular-wave having a constant period, which comprises:

    means for separately calculating a command value of said command signal from said command value generating means and a time product of said pulse width modulation pulses and calculating a difference value between the both time products, said pulse width modulation pulse being calculated by said difference value to said command signal from said command value generating means.

2. A pulse width modulation control system for a electric power converter in which pulse width modulation pulses for driving semiconductor elements composing an electric converter are calculated by capturing a command signal from a command value generating means every predetermined time period and calculating a pulse (pulse width modulation pulse) having a width corresponding to a magnitude of said command signal, which comprises:

means for separately calculating a command value of said command signal from said command value generating means and a time product of said pulse width modulation pulses and calculating a difference value between the both time products, said pulse width modulation pulse being calculated by said difference value to said command signal from said command value generating means.

3. A pulse width modulation control system according to claim 1, wherein said pulse width modulation pulse is calculated by setting a calculation period for calculating said pulse width modulation pulse to a one-half period of said triangular-wave carrier signal, calculating a difference between an average value of said command values and an average value of said pulse width modulation pulses for every said calculation period, and adding said difference to said command value for the next pulse calculation period.

4. A pulse width modulation control system according to claim 2, wherein said pulse width modulation pulse is calculated by calculating a difference between an average value of said command values and an average value of said pulse width modulation pulses every said calculation period for calculating said pulse width modulation pulse, and adding said difference to said command value for the next pulse calculation period.

5. A pulse width modulation control system according to any one of claim 3 and claim 4, wherein when said command value is a periodic function, an average value of said command values is calculated using a function obtained in advance by integrating said periodic function.

6. A pulse width modulation control system according to any one of claim 1 to claim 5, wherein said pulse width modulation pulse is calculated by multiplying a gain to the difference between said average value of the command values and said average value of the pulse width modulation pulses, and adding the calculated result to said command value.

## FIG.1

EP 0 793 335 A2

# FIG.2

# FIG.3

# FIG.4

(a) vr  Δt

(b) vp

(c) MEAN VALUE vp

(d) va

(e) ve

## FIG.5A

U PHASE
CURRENT

V PHASE
CURRENT

W PHASE
CURRENT

## FIG.5B

U PHASE
CURRENT

V PHASE
CURRENT

W PHASE
CURRENT